# EUROPÄISCHE PATENTANMELDUNG

(11) **EP 0 838 297 A1**
(43) Veröffentlichungstag der Anmeldung: **29.04.1998**
(21) Anmeldenummer: 97810459.4
(22) Anmeldetag: 09.07.1997
(51) Int. Cl.: B23K 1/005, B23K 26/04

(54) **Lötkopf einer automatischen Lötanlage**

(30) Priorität: 20.08.1996 CH 2036/96
(71) Anmelder: MTA Automation AG, CH-2555 Brügg (CH)
(72) Erfinder: Moser, Peter, 2563 Ipsach (CH); François, Candolfi, 2560 Nidau (CH); Knuchel, Claude-Alain, 2603 Péry (CH)
(74) Vertreter: AMMANN PATENTANWAELTE AG BERN

(57) **Zusammenfassung**

Eine automatische Lötanlage umfasst einen Lötkopf (10), der sich aus einem Verbindungsteil (11), einem Lötdrahtspender (12), einer Fokussieroptik (13) und einem Stellglied (24) zusammensetzt. Der Lötkopf (10) ist auf den Arm eines Roboters (16) montiert und lässt sich durch diesen so in Position fahren, dass der Lötdraht (14) in den Bereich einer jeweiligen Lötstelle (19) gelangt. Die Fokussieroptik (13) ist über eine Lichtleitfaser (22) mit einem Laser (21) verbunden und fokussiert den freien Laserstrahl (15) auf die Lötstelle (19). Das über eine Steuerung (25) gesteuerte Stellglied (24) erlaubt es, unabhängig vom Roboter (16) den Abstand zwischen der Fokussieroptik (13) und der Lötstelle (19) zu verändern und damit die Breite des Laserstrahls (15) an der Lötstelle (19). Hierdurch ist eine gleichmässigere Temperaturverteilung bei Lötstellen (19) unterschiedlicher Grösse erreichbar. Die Steuerungen (17, 23, 25) des Roboters (16), des Lasers (23) bzw. des Stellgliedes (24) wirken zusammen, um in jedem Fall eine optimale Energiemenge für die jeweilige Lötung liefern zu können.

## Beschreibung

Die Erfindung betrifft einen Lötlopf zur Verwendung zusammen mit einem Roboter als automatische Lötanlage entsprechend dem Oberbegriff des unabhängigen Anspruch 1.

Automatische Lötanlagen sind bekannt. Sie dienen zur Rationalisierung bei der Löttechnik und arbeiten auf der Basis von Robotern oder Vollautomaten. Bekannt sind Anlagen, deren Löttechnik entweder auf konventionellen Lötkolben oder Hochfrequenzlötkolben, auf Mikroflammlöten oder auf Löten mit Induktion basiert. Weiter sind Anlagen bekannt, bei denen das Löten mit Hilfe eines gesteuerten Laserstrahls erfolgt.

Für den letzeren Fall ist u. a. eine Anlage auf dem Markt, bei der ein Nd:YAG-Laser mit 50 Watt Ausgangsleistung verwendet wird. Die Energie dieses Lasers wird durch einen Lichtleiter und eine Fokussieroptik zum Lötpunkt geleitet. Durch die Kombination diverser Lichtleiter und Fokussieroptiken lässt sich dabei ein breites Anwendungsfeld für unterschiedliche Lötungen abdecken. Bei dieser bekannten Anordnung wird ein Brennpunktdurchmesser zwischen 300 und 1500 um ausgewählt durch Variation der Brennweite, die etwa 50 bis 150 mm beträgt. Diese verschiedenen Möglichkeiten erlauben es, Lötstellen zu erreichen, die mit Löttechnik anderer Art schwer oder gar nicht erreichbar sind.

Als Vorteil der Laserlöttechnik ist zu nennen, dass sie gute Stabilität der Laserquelle aufweist und die Möglichkeit bietet, durch verschiedene Impulstypen den Strahl fast beliebig zu modulieren. Bei richtiger Einstellung der verschiedenen Parameter führt dies zu einer sehr hohen Qualität der Lötstellen und zu einer ausgezeichneten Wiederholgenauigkeit des Lötprozesses. Weiter ist es vorteilhaft, dass die Energieverteilung punktförmig erfolgt und ohne Berührung der Komponenten. Dies schliesst eine Vielzahl von Fehlerquellen aus und schont das Werkstück, beispielsweise einen integrierten Halbleiterbaustein IC.

Als Nachteil der beschriebenen Technik hat sich ergeben, dass die Unterschiede verschieden grosser Lötstellen, die in der Reihenfolge der Lötungen beliebig abwechseln, bei der Programmierung eines Lötautomaten nur schwierig zu berücksichtigen sind. Dies beeinflusst die Geschwindigkeit des Lötens und die Qualität der erzeugten Lötstellen. Es ist daher eine Aufgabe der Erfindung, die bekannte Laserlöttechnik so zu verbessern, dass der genannte Nachteil behoben wird.

Die Lösung dieser Aufgabe ist durch den kennzeichnenden Teil des unabhängigen Anspruches 1 bestimmt. Die abhängigen Ansprüche geben Ausgestaltungen der Erfindung wieder.

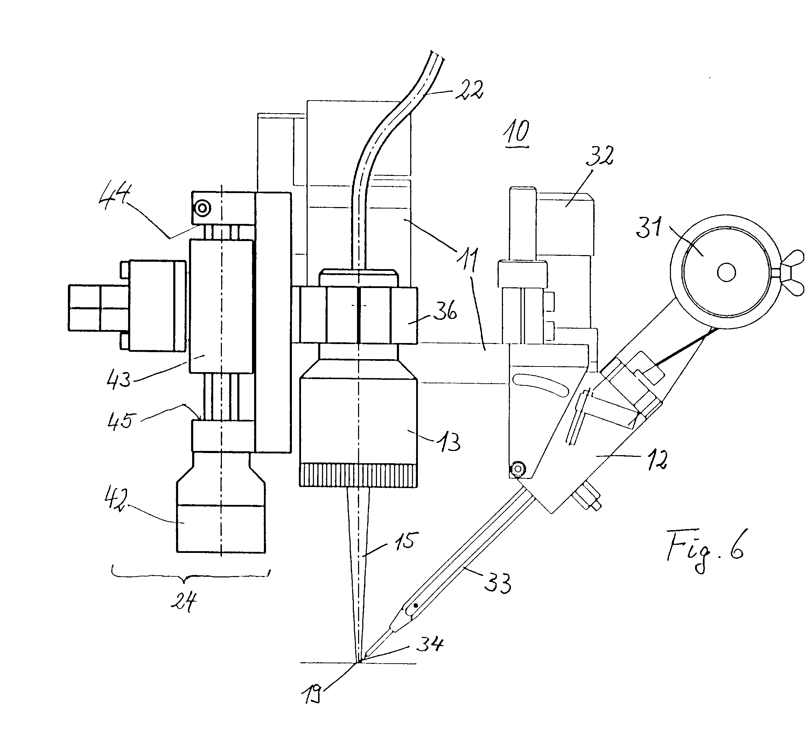

Im folgenden wird anhand von Figuren 6 die Erfindung eingehender dargelegt. Es zeigen:
- Figur 1: Blockschaltbild einer Laserlötanlage
- Figur 2 - 5: diverse Positionen einer detaillierten ersten Ausführung eines Laserlotkopfes
- Figur 6: zweite Ausführung eines Laserlötkopfes.

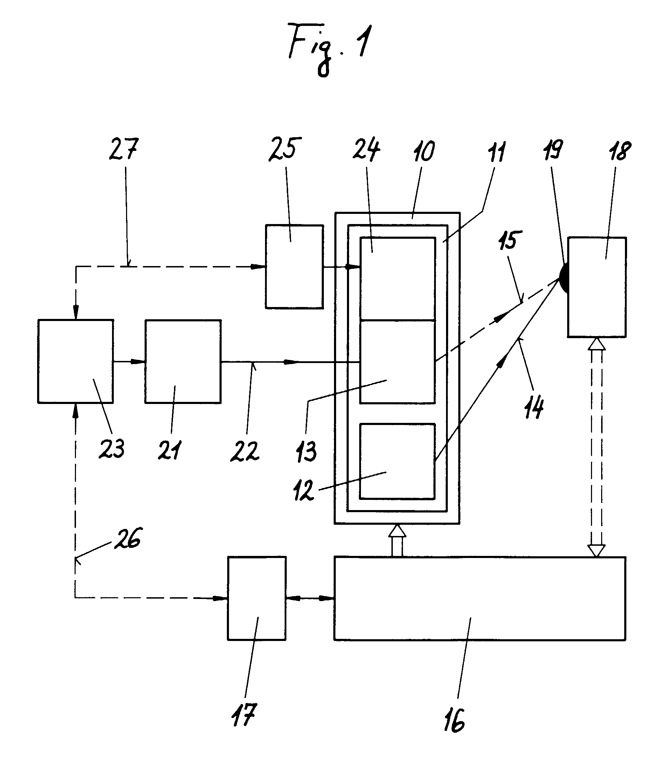

Figur 1 zeigt das Blockschaltbild einer Laserlötanlage. Diese Anlage umfasst einen erfindungsgemässen Lötkopf 10, der sich aus einem Verbindungsteil 11, einem Lötdrahtspender 12, einer Fokussieroptik 13 und einem Stellglied 24 zusammensetzt. Der Lötkopf 10 ist auf dem Arm eines Roboters 16 montiert und kann durch diesen so in Position gefahren werden, dass der aus dem Lötdrahtspender 12 mittels eines nicht gezeigten Motors abgegebene Lötdraht 14 in den Bereich der zu lötenden Lötstelle 19 gelangt. Diese Lötstelle 19 befindet sich auf einem Werkstück 18, beispielsweise einem Halbleiterbaustein, der mit einer Leiterplatte verlötet werden soll. Das Werkstück 18 kann eventuell ebenfalls durch den Roboter 16 manipuliert werden, was durch einen gestrichelten Doppelpfeil symbolisiert wird.

Die Fokussieroptik 13 des Lötkopfes 10 ist in konventioneller Weise über eine Lichtleitfaser 22 mit einem Laser 21, beispielsweise einem Nd:YAG-Laser von etwa 50 Watt gekoppelt. Zur Steuerung der vom Laser 21 jeweils abgegebenen Lötleistung dient eine Steuerung 23, die entsprechend den Lötanforderungen programmierbar ist. Desgleichen ist der Roboter 16 durch eine zugeordnete Robotersteuerung 17 gesteuert und arbeitet mit der erstgenannten Steuerung 23 des Lasers zusammen, was durch einen gestrichelten Doppelpfeil 26 dargestellt ist. Die Fokussieroptik 13 dient zum Fokussieren des über die Lichtleitfaser 22 vom Laser 21 ankommenden Laserstrahles, der als freier Strahl 15 in den Bereich der zu lötenden Stelle 19 gelenkt wird. Hierbei entspricht der Abstand zwischen der Fokussieroptik 13 und der Lötstelle 19 etwa der Brennweite der Fokussieroptik, so dass ein der Fokussierung entsprechender, kleiner Lichtfleck auf die zu lötende Stelle 19 trifft. Es ist hierbei nicht erforderlich, dass das Auftreffen des laserstrahls 15 orthogonal zum Werkstück 18 erfolgt, was im Blozkschaltbild durch eine nicht horizontale Linie 15 angedeutet ist. Die bis hierher besprochene Anordnung von Fig. 1 ist im wesentlichen bekannt und konventionell.

Neu ist vor allen Dingen das Stellglied 24, das mechanisch starr mit der Fokussieroptik 13 verbunden ist. Dem Stellglied 24 zugeordnet ist eine Steuerung 25, die gleich wie die Steuerung 17 des Roboters 16 mit der Lasersteuerung 23 zusammenarbeitet, was durch einen gestrichelten Doppelpfeil 27 dargestellt ist. Das Stellglied 24 ermöglicht aufgrund der Steuerung 25 eine mechanische Verschiebung der Fokussieroptik 13 unabhängig von der Bewegung des Roboters 16. Diese Bewegung dient zum Defokussieren des freien Laserstrahls 15, wodurch an der jeweiligen Lötstelle 19 ein der Grösse dieser zu lötenden Stelle entsprechend grosser Lichtfleck entsteht. Dieser der Lötstelle angepasste Lötlichtpunkt erlaubt eine gleichmässigere Erwärmung der Lötstelle 19, was das Lötergebnis verbessert. Zur ausreichenden Zufuhr der jeweils benötigten Energie durch den Laser 21 ist es hierbei notwendig, dass jeweils über die Verbindung 27 ein Steuersignal an die Lasersteuerung 23 abgegeben wird, das die Stellung der Fokussieroptik bzw. des Stellgliedes 24 angibt. Hierdurch ist die Lasersteuerung 23 in der Lage, die Energiemenge jeweils automatisch der Grösse der aktuellen Lötstelle 19 anzupassen. Zu beachten ist dabei, dass durch das Stellglied 24 die Position des Lötdrahtes 14 nicht verändert wird, sondern die geometrische Position zwischen Lötdrahtspender 12 und Fokussieroptik 13 bzw. der Abstand zwischen Fokussierungspunkt des Laserstrahls 15 und dem Lötdrahtende.

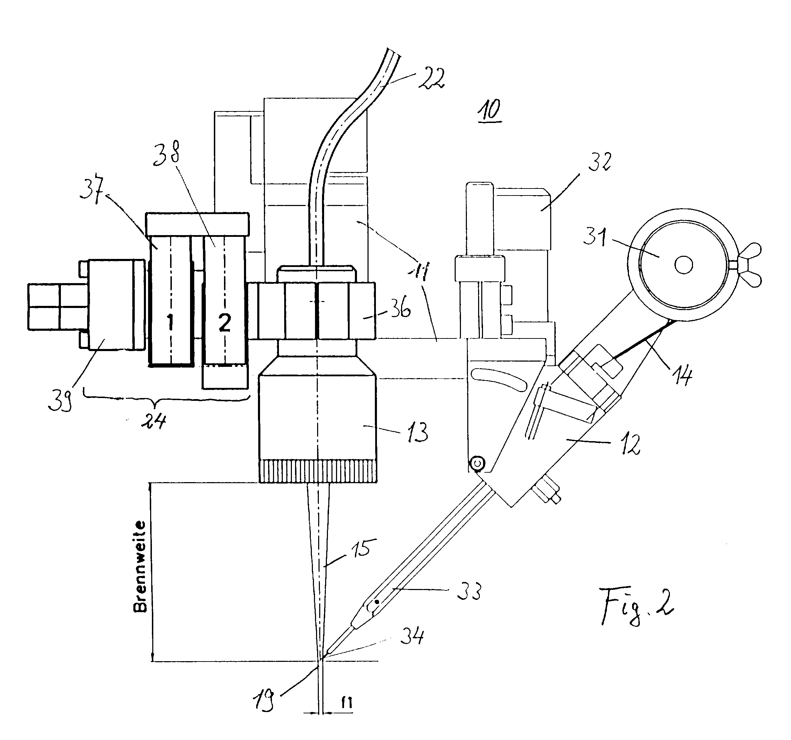

Figur 2 zeigt die Seitenansicht eines detaillierten Lötkopfes 10. Dieser Lötkopf umfasst wie bereits anhand von Figur 1 beschrieben einen Verbindungsteil 11, einen Lötdrahtspender 12 und eine Fokussieroptik 13. Der Lötdrahtspender 12 setzt sich zusammen aus einer Halterung für eine Lötdrahttrommel 31, einem Motor 32 zum Transportieren des Lötdrahtes und einer Drahtführung 33 in Form eines Rohres, die den Lötdraht zur Lötstelle führt. Der Lötdraht 14 schaut als Lötdrahtspitze 34 am Ende dieser Drahtführung 33 im Bereich der Lötstelle 19 aus diesem Rohr heraus.

Die Fokussieroptik 13 ist auf ihrer einen Seite mit der Lichtleitfaser 22 verbunden. Auf der anderen Seite gibt sie den freien Laserstrahl 15 ab, dessen Brennpunkt mit der Lötstelle 19 und der Lötdrahtspitze 34 zusammenfällt. Der Durchmesser des Strahls 15 an der Lötstelle 19 ist mit fl bezeichnet.

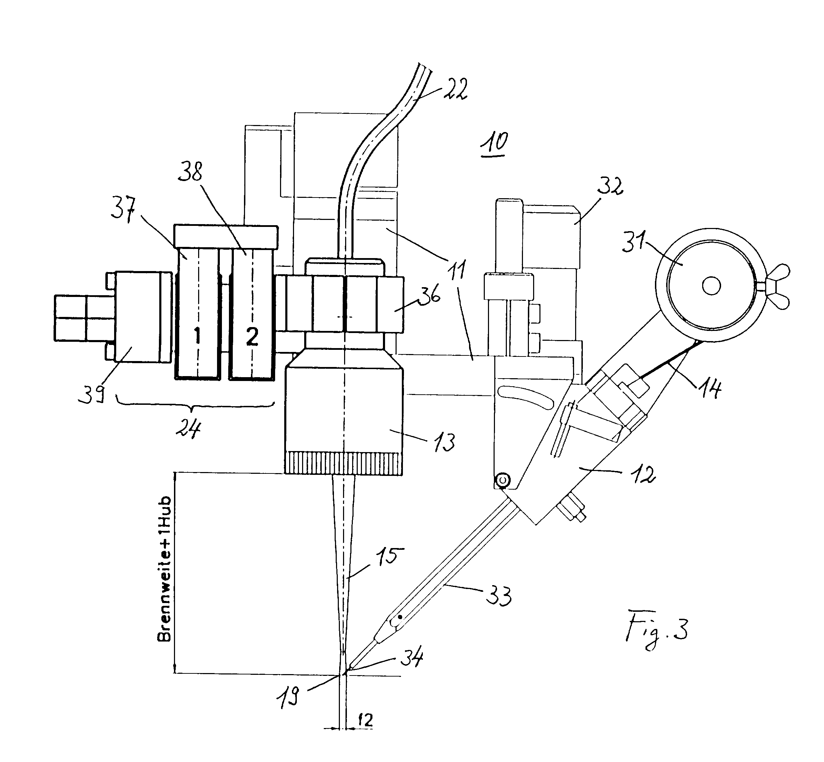

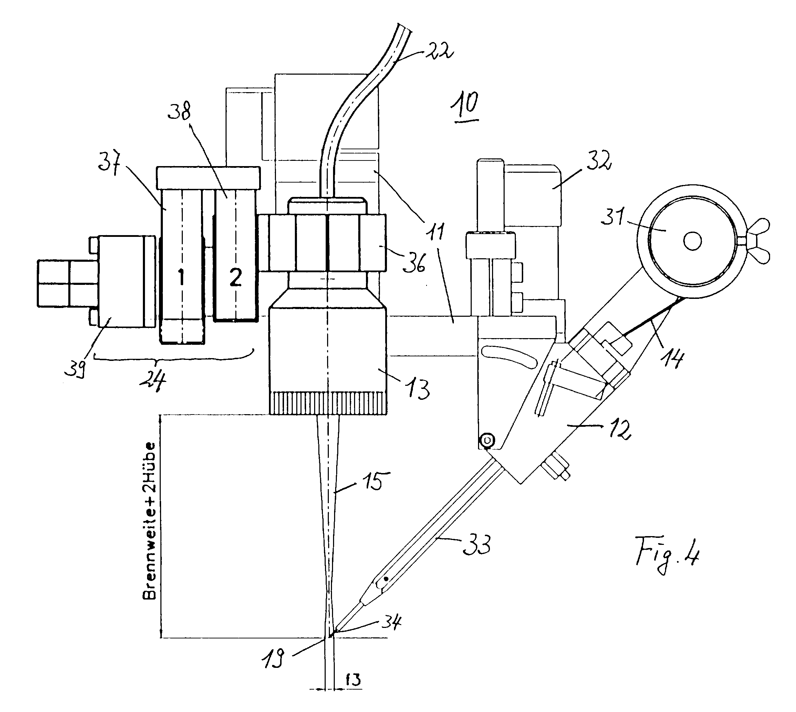

Die Fokussieroptik 13 ist mittels einer Halterung 36 mit dem Stellglied 24 verbunden. Dieses Stellglied setzt sich aus zwei Pneumatikschlitten 37 und 38 zusammen, die mittels einer Pneumatik-Ventilgruppe 39 steuerbar sind. Die Pneumatikschlitten 37, 38 lassen sich mittels der Ventilgruppe 39 sukzessive von ihrer einen Anschlagsposition in die jeweils zweite Anschlagsposition umsteuern. Hierdurch lässt sich die Fokussieroptik 13 insgesamt in drei stabile Positionen bringen. Die mit Figur 2 im wesentlichen identischen Abbildungen von Figur 3 und 4 zeigen die hierdurch bewirkten Arbeitsstellungen der Fokussieroptik 13. Da die Verschiebung der Fokussieroptik 13 durch die Pneumatikschlitten 37, 38 keinen Einfluss auf die Optik als solche ausübt, verschiebt sich mit der Optik auch der Brennpunkt des freien Laserstrahls 15. Dies bewirkt, dass an der Lötstelle 19 ein vergrösserter Lichtfleck an der Lötstelle 19 auftritt. Auf diese Weise lassen sich unabhängig von der Bewegung des Roboters 16 auf einfache Art durch ein jeweils einziges Steuersignal der Lichtfleck an der potentiellen Lötstelle in drei verschiedene Grössen fl, f2 bzw. f3 erzeugen. Die Spitze 34 des Lötdrahtes 14 bleibt dabei stabil in ihrer Position.

Das Verbindungsteil 11 ist eine stabile Mechanik, die die Fokussieroptik 13 mit dem Lötdrahtspender 12 zusammenhält. Ihr Aufbau ist beliebig und an die Aufgabe angepasst.

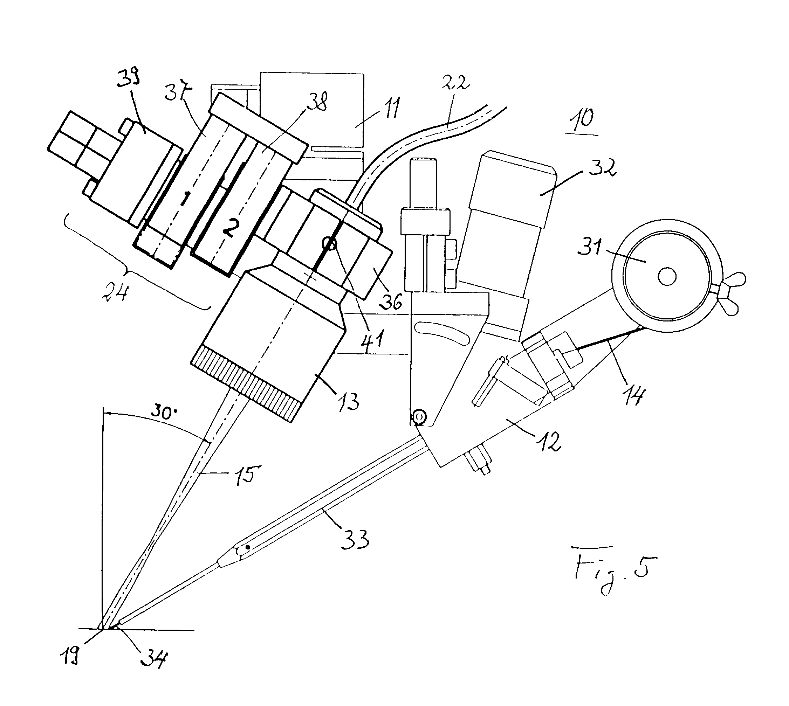

Figur 5 zeigt eine weitere Ansicht des Lötkopfes 10. Bei dieser Ansicht ist die Fokussieroptik 13 gegenüber den Darstellungen der Figuren 2 bis 4 um 30° aus der Vertikalen verschwenkt. Diese Verschwenkung erfolgt zusammen mit der Verschwenkung der Pneumatikschlitten 37, 38, um eine substantielle oder virtuelle Achse 41. Dies erlaubt die Bestrahlung der Lötstellen 19 schräg von oben, was aus Gründen der Zugänglichkeit von Vorteil sein kann. Hierbei ist zu beachten, dass natürlich auch der Lötdrahtspender 12 bzw. die Drahtführung 23 entsprechend in ihrer Position verschwenkt werden muss, so dass wiederum der freie Laserstrahl 15 in den Bereich der Lötdrahtspitze 34 fällt. Weiter ist ersichtlich, dass auch andere Winkel als die erwähnten 30° einstellbar sind.

Figur 6 zeigt eine weitere Ausführung eines Lötkopfes 10. Bei diesem Lötkopf ist das Stellglied 24 nicht als Pneumatikschlitten, sondern als Motorschlitten, d. h. durch einen Motor 42 bewegbaren Schlitten 43, ausgebildet. Durch diese Art der Ausbildung ist es möglich, jegliche Zwischenpositionen in dem durch die Begrenzungen 44 und 45 gegebenen Bereich einzustellen. Entsprechend lässt sich die Fleckgrösse des freien Laserstrahls 15 an der Lötstelle 19 beliebig variieren.

Die beschriebenen Ausbildungen des Lötkopfes 10 sind einfach und erlauben ohne Bewegung des Roboters 16 eine Variation der Breite fl, f2, f3 des freien Laserstrahls 15 im Bereich der Lötstelle 19. Die anhand der Figuren 2 bis 6 beschriebenen Ausbildungen des Stellgliedes 24 sind nur beispielhaft. Es können ohne weiteres andere Anordnungen vorgesehen sein, z. B. unter Verwendung einer motorgetriebenen Spindel, eines Zahnstangenantriebs usw.

In den gezeigten Anordnungen wird durch die Bewegung des Stellgliedes 24 der Abstand zwischen der Fokussieroptik 13 und der Lötstelle 19 jeweils vergrossert, so dass der Brennpunkt des freien Laserstrahls 15 zwischen dieser Optik und der Lötstelle 19 liegt. Es ist ohne weiteres möglich, alternativ den Abstand zwischen der Fokussieroptik 13 und der Lötstelle 19 zu verringern. Hierdurch wird der Brennpunkt jedoch in das Innere des Werkstückes 18 gelenkt, was gegenüber der gezeigten Art eher nachteilig ist.

## Patentansprüche

1. Lötkopf (10) zur Verwendung zusammen mit einem Roboter (16) als automatische Lötanlage, wenigstens umfassend
einen Lötdrahtspender (12),
eine mit einer Lichtleitfaser (22) verbundene Fokussieroptik (13) für einen Laserstrahl, und
ein Verbindungsteil (11) zum starren, mechanischen Verbinden des Lötdrahtspenders (12) und der Fokussieroptik (13), derart, dass das Ende des Lötdrahtes (14) im Bereich des freien, fokussierten Laserstrahls (15) liegt und durch den Roboter (16) in den Bereich einer jeweiligen Lötstelle (19) bringbar ist,
gekennzeichnet
durch ein vom Roboter (16) unabhängiges, steuerbares Stellglied (24) zum Verändern der geometrischen Position zwischen Lötdrahtspender (12) und Fokussieroptik (13), durch welches die Grösse des vom Laserstrahl (15) beleuchteten Flecks an die Grösse der jeweiligen Lötstelle (19) anpassbar ist.

2. Lötkopf nach Anspruch 1,
dadurch gekennzeichnet,
dass das Stellglied (24) mit der Fokussieroptik (13) starr verbunden ist und parallel zur optischen Achse der Fokussieroptik (13) bezüglich des Verbindungsteils (11) verschieblich ist.

3. Lötkopf nach Anspruch 2,
dadurch gekennzeichnet,
dass das Stellglied (24) innerhalb eines vorgegebenen Bereichs kontinuierlich verschieblich ist.

4. Lötkopf nach Anspruch 2,
dadurch gekennzeichnet,
dass das Stellglied (24) wenigstens zwei Endlagen aufweist, zwischen denen es diskontinuierlich verschieblich ist.

5. Lötkopf nach Anspruch 3,
dadurch gekennzeichnet,
dass das Stellglied (24) einen Motorschlitten umfasst.

6. Lötkopf nach Anspruch 4,
dadurch gekennzeichnet,
dass das Stellglied (24) wenigstens einen Pneumatikschlitten mit zwei Endlagenkontrollen umfasst.

7. Lötkopf nach Anspruch 6,
dadurch gekennzeichnet,
dass das Stellglied (24) zwei oder mehr Pneumatikschlitten umfasst, die gestaffelt ansteuerbar sind.

8. Lötkopf nach Anspruch 2,
dadurch gekennzeichnet,
dass eine Drehachse vorgesehen ist, um die die Fokussieroptik (13) zusammen mit dem Stellglied (24) bezüglich des Verbindungsteils (11) schwenkbar ist.
